# EUROPEAN PATENT SPECIFICATION

(11) **EP 1 696 438 B1**
(45) Date of publication and mention of the grant of the patent: **07.05.2014**
(21) Application number: 06110025.1
(22) Date of filing: 16.02.2006
(51) Int. Cl.: G11B 27/30, G11B 27/19, G11B 20/12, G11B 7/007

(54) **Optical disk, optical disc apparatus, and optical disk processing method**
Optische Platte, optisches Plattengerät und optisches Plattenverarbeitungsverfahren
Disque optique, appareil à disque optique, et procédé de traitement du disque optique

(30) Priority: 28.02.2005 JP 2005053330
(43) Date of publication of application: 30.08.2006
(73) Proprietor: Kabushiki Kaisha Toshiba, Tokyo 105-8001 (JP)
(72) Inventor: Kobayashi, Tadashi, Minato-ku Tokyo 105-8001 (JP)
(74) Representative: Henkel, Breuer & Partner

(56) References cited:
- US-A1- 2003 076 758
- PATENT ABSTRACTS OF JAPAN vol. 2000, no. 13, 5 February 2001 (2001-02-05) & JP 2000 298883 A (MATSUSHITA ELECTRIC IND CO LTD), 24 October 2000 (2000-10-24)

## Description

One embodiment of the invention relates to an optical disk, such as DVD-R or DVD-RW. One embodiment of the invention further relates to an optical disk apparatus and an optical disk processing method which process such an optical disk.

In recent years, various optical disks, including DVD-R and DVD-RW, have been widely used. In the recording layers of these optical disks, land tracks and groove tracks are formed alternately from the inner edge toward the outer edge. The land tracks are provided with land pre-pits (LPP) indicating the addresses of the groove tracks. To achieve higher capacity, tremendous efforts have been put into the research and development of an optical disk with a plurality of recording layers.

For example, Jpn. Pat. Appln. KOKAI Publication No. 10-289450 discloses a focus servo control method with a servo circuit which, when recording and reproducing information onto and from an optical disk with a plurality of recording layers, starts a focus search operation from the surface close to the recording and reproducing surface on the front or back side of the optical disk.

Furthermore, Jpn. Pat. Appln. KOKAI Publication No. 10-340536 discloses techniques related to a pre-pit information detecting unit capable of obtaining information precisely based on a pre-pit signal even when a noise component is superimposed on the wobble signal obtained from the tracks.

In addition, Jpn. Pat. Appln. KOKAI Publication No. 2003-317259 discloses the technique for providing an inner-periphery LPP detecting means for detecting an LPP (land pre-pit) signal obtained from the land track adjacent to the inner periphery of an information track in addition to outer-periphery LPP detecting means for detecting an LPP signal obtained from the land track adjacent to the outer periphery of the information track and acquiring rough address information with the inner-periphery LPP detecting means when the outer-periphery LPP signal cannot be detected.

Document US 2003/076 758 discloses a multilayer optical disk using land-groove recording, wherein a layer number identifying the recording layer is included in address information in land pre-pits.

In the above patent documents, however, the technique for detecting an LPP signal in an optical disk with a plurality of recording layers is not disclosed.

Trial recording areas in optical disks, including DVD-R and DVD-RW, have been determined in the written standards (DVD-R BOOK, DVD-RW BOOK, and DVD-RAM BOOK). In recent years, the research and development of an optical disk made multilayered to increase the recording capacity have been carried out, taking no account of the method of detecting LPP when the optical disk is multilayered, which becomes a problem.

An object of the present invention is to provide an optical disk which has a plurality of recording layers that cause a pit (pre-pit) in one track to indicate the address of the other adjacent track and which enables suitable pit reproduction.

Another object of the present invention is to provide an optical disk apparatus and an optical disk processing method which are capable of reproducing pits suitably from an optical disk with a plurality of recording layers that cause a pit (pre-pit) in one track to indicate the address of the other adjacent track.

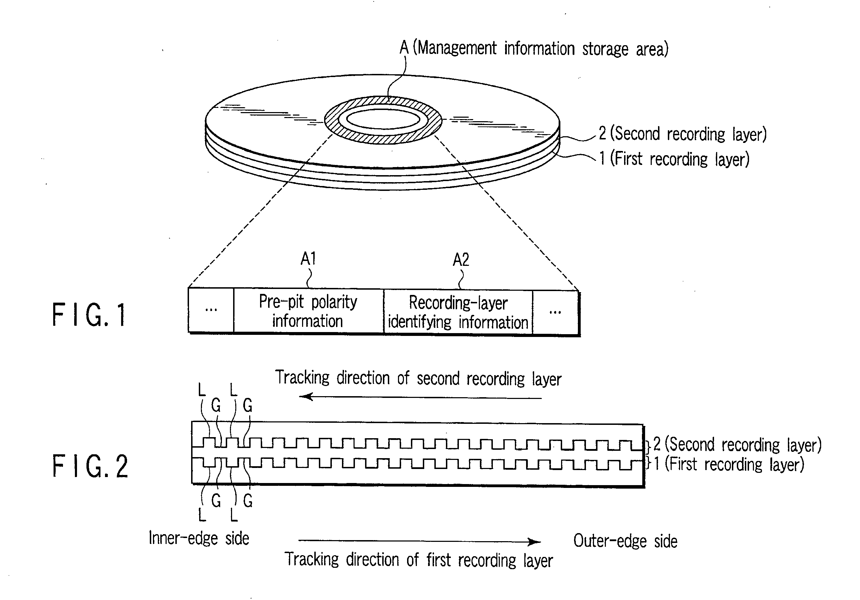

According to a first aspect of the present invention, there is provided an optical disk comprises: a first and a second recording layer in each of which first and second tracks (or land tracks and groove tracks) are formed alternately from the inner edge toward the outer edge, the first tracks (or land tracks) of the first recording layer having pits which indicate the addresses of the second tracks of the first recording layer adjacent to the inner periphery of the first tracks of the first recording layer, the second tracks (or groove tracks [which may be virtually considered to be land tracks, referring to FIG. 2]) of the second recording layer having pits which indicate the addresses of the first tracks of the second recording layer adjacent to the inner periphery of the second tracks of the second recording layer, and the second tracks of the first recording layer and the first tracks of the second recording layer being tracks in which marks representing various types of data can be recorded; a first area in which pit polarity information has been recorded that indicates the pits in the first tracks of the first recording layer indicate the addresses of the second tracks of the first recording layer adjacent to the inner periphery of the first tracks of the first recording layer and the pits in the second tracks of the second recording layer indicate the addresses of the first tracks of the second recording layer adjacent to the inner periphery of the second tracks of the second recording layer; and a second area in which recording-layer identifying information to identify the first and second recording layers (or information to indicate whether the layer is the first layer or the second layer) has been recorded.

According to another aspect of the present invention, there is provided an optical disk comprising: a first and a second recording layer in each of which first and second tracks (or land tracks and groove tracks) are formed alternately from the inner edge toward the outer edge, the first tracks (or land tracks) of the first recording layer having pits which indicate the addresses of the second tracks of the first recording layer adjacent to the inner periphery of the first tracks of the first recording layer, the second tracks (or groove tracks [which may be virtually considered to be land tracks, referring to FIG. 2]) of the second recording layer having pits which indicate the addresses of the first tracks of the second recording layer adjacent to the outer periphery of the second tracks of the second recording layer, and the second tracks of the first recording layer and the first tracks of the second recording layer being tracks in which marks representing various types of data can be recorded; a first area in which pit polarity information has been recorded that indicates the pits in the first tracks of the first recording layer indicate the addresses of the second tracks of the first recording layer adjacent to the inner periphery of the first tracks of the first recording layer and the pits in the second tracks of the second recording layer indicate the addresses of the first tracks of the second recording layer adjacent to the outer periphery of the second tracks of the second recording layer; and a second area in which recording-layer identifying information to identify the first and second recording layers (or information to indicate whether the layer is the first layer or the second layer) has been recorded.

According to still another aspect of the present invention, there is provided an optical disk apparatus which processes an optical disk having a first and a second recording layer in each of which first and second tracks (or land tracks and groove tracks) are formed alternately from the inner edge toward the outer edge, the optical disk apparatus comprising: a detecting unit configured to detect the reflected light from an optical disk where pits indicating addresses are recorded in the first tracks (or land tracks) of the first recording layer, pits indicating addresses are recorded in the second tracks (or groove tracks [which may be virtually considered to be land tracks, referring to FIG. 2]) of the second recording layer, and marks indicating various types of data can be recorded in the second tracks of the first recording layer and in the first tracks of the second recording layer; a decision unit configured to determine a method of detecting the pits in the first and second recording layers on the basis of pit polarity information indicating the polarity of the pits included in the information reflected in the reflected light detected by the detecting unit (or information to indicate whether the first and second layers have the same polarity or different polarities) and of recording-layer identifying information to identify the first and second recording layers (or information to indicate whether the layer is the first layer or the second layer); and a reproducing unit configured to reproduce addresses from the pits in the first and second recording layers by the detecting method determined by the decision unit.

According to still another aspect of the present invention, there is provided an optical disk processing method of processing an optical disk having a first and a second recording layer in each of which first and second tracks (or land tracks and groove tracks) are formed alternately from the inner edge toward the outer edge, the optical disk processing method comprising: detecting the reflected light from an optical disk where pits indicating addresses are recorded in the first tracks (or land tracks) of the first recording layer, pits indicating addresses are recorded in the second tracks (or groove tracks [which may be virtually considered to be land tracks, referring to FIG. 2]) of the second recording layer, and marks indicating various types of data can be recorded in the second tracks of the first recording layer and in the first tracks of the second recording layer; and determining a method of detecting the pits in the first and second recording layers on the basis of pit polarity information indicating the polarity of the pits included in the information reflected in the detected reflected light (or information to indicate whether the first and second layers have the same polarity or different polarities) and of recording-layer identifying information to identify the first and second recording layers (or information to indicate whether the layer is the first layer or the second layer) and reproducing addresses from the pits in the first and second recording layers by the determined detecting method.

This summary of the invention does not necessarily describe all necessary features so that the invention may also be a sub-combination of these described features.

The invention can be more fully understood from the following detailed description when taken in conjunction with the accompanying drawings, in which:
FIG. 1 schematically shows the configuration of an optical disk with a plurality of recording layer according to an embodiment of the present invention;
FIG. 2 is a schematic sectional view of an optical disk with a plurality of recording layers according to the embodiment;
FIG. 3 is a top view of a first recording layer of an optical disk with a plurality of recording layers according to the embodiment;
FIG. 4 is a top view of a second recording layer of the optical disk according to the embodiment;
FIG. 5 schematically shows the configuration of an optical disk apparatus according to the embodiment;
FIG. 6 shows a 4-quadrant photodetector constituting a light detector in the optical disk apparatus of FIG. 5 according to the embodiment;
FIG. 7 shows a signal processing circuit in the optical disk apparatus of FIG. 5 according to the embodiment;
FIG. 8 shows a difference signal (pre-pit signal) obtained as a result of the selection made by the optical disk apparatus of FIG. 5 according to the embodiment; and
FIG. 9 is a flowchart to help explain the process of selecting a difference signal (in a pit detecting method) in the optical disk apparatus of FIG. 5 according to the embodiment.

Various embodiments according to the invention will be described hereinafter with reference to the accompanying drawings. In general, according to one embodiment of the invention, according to a first aspect of the present invention, there is provided an optical disk comprises a first and a second recording layer in each of which first and second tracks (or land tracks and groove tracks) are formed alternately from the inner edge toward the outer edge, the first tracks (or land tracks) of the first recording layer having pits which indicate the addresses of the second tracks of the first recording layer adjacent to the inner periphery of the first tracks of the first recording layer, the second tracks (or groove tracks [which may be virtually considered to be land tracks, referring to FIG. 2]) of the second recording layer having pits which indicate the addresses of the first tracks of the second recording layer adjacent to the inner periphery of the second tracks of the second recording layer, and the second tracks of the first recording layer and the first tracks of the second recording layer being tracks in which marks representing various types of data can be recorded; a first area in which pit polarity information has been recorded that indicates the pits in the first tracks of the first recording layer indicate the addresses of the second tracks of the first recording layer adjacent to the inner periphery of the first tracks of the first recording layer and the pits in the second tracks of the second recording layer indicate the addresses of the first tracks of the second recording layer adjacent to the inner periphery of the second tracks of the second recording layer; and a second area in which recording-layer identifying information to identify the first and second recording layers (or information to indicate whether the layer is the first layer or the second layer) has been recorded.

A conventional optical disk, such as DVD-R or DVD-RW, has a single recording layer into or from which data is recorded or reproduced. Recently, the use of a multilayered structure of recording layers has been examined to increase the recording capacity.

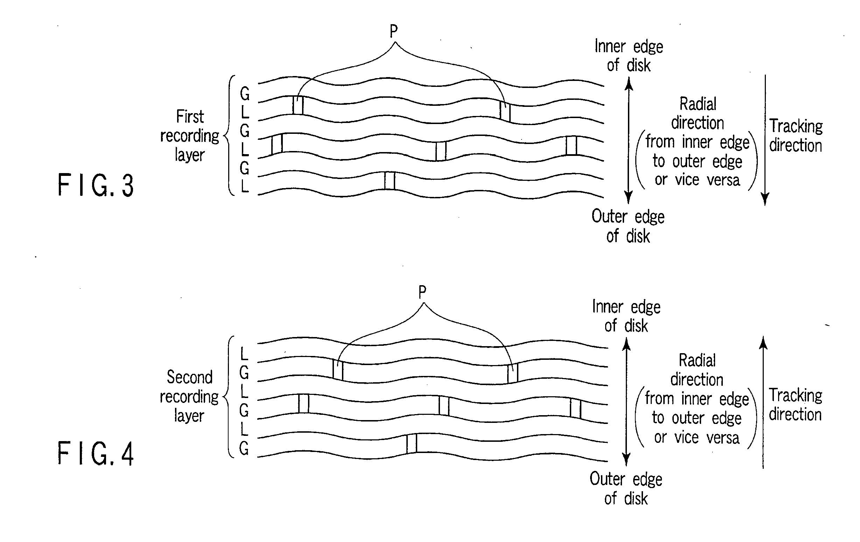

FIGS. 1 to 4 schematically show the configuration of an optical disk with a plurality of recording layers according to an embodiment of the present invention. FIG. 1 shows an example of information recorded on the optical disk with a plurality of recording layers according to the embodiment. FIG. 2 is a schematic sectional view of the optical disk with a plurality of recording layers according to the embodiment. FIG. 3 is a top view of a first recording layer of the optical disk with a plurality of recording layers according to the embodiment. FIG. 4 is a top view of a second recording layer of the optical disk according to the embodiment.

As shown in FIG. 1, the optical disk has a first recording layer 1 and a second recording layer 2. The optical disk further has a management information storage area A. For example, the management information storage area A is provided for each of the first recording layer 1 and the second recording layer 2. The management information storage area A includes an area A1 in which pre-pit polarity information is recorded beforehand and an area A2 in which recording-layer identifying information is recorded beforehand. The use of the pre-pit polarity information and recording-layer identifying information will be explained in detail later.

As shown in FIG. 2, the optical disk has the first recording layer 1 and second recording layer 2. The first recording layer 1 and the second recording layer 2 are formed separately and laminated together. Accordingly, the concavo-convex shape of the first recording layer 1 is opposite to that of the second layer 2. The land tracks L of the second recording layer 2 are positioned so as to face the land tracks L of the first recording layer 1. The groove tracks G of the second recording layer 2 are positioned so as to face the groove tracks G of the first recording layer 1. Since the concavo-convex shape of the first recording layer 1 is opposite to that of the second recording layer 2, for example, the land tracks of the second recording layer 2 may be considered as groove tracks and the groove tracks of the second recording layer 2 may be considered as land tracks.

Tracking on the first recording layer 1 is done from the inner edge of the optical disk toward the outer edge, whereas tracking on the second recording layer 2 is done from the outer edge toward the inner edge. The reason is that the optical disk is of the Opposite Track Path (OTP) type where the spiral direction in the first recording layer is the reversal of that in the second recording layer. For example, in the first recording layer 1, tracking is done spirally from the inside toward outside of the disk, whereas in the second recording layer, tracking is done spirally from the outside toward inside of the disk.

Referring to FIGS. 3 and 4, an optical disk whose pre-pits have the same polarity in the first recording layer 1 and second recording layer 2 will be explained.

As shown in FIG. 3, the first recording layer 1 has a plurality of land tracks L and a plurality of groove tracks G formed alternately from the inner edge of the optical disk toward the outer edge. In the first recording layer 1, a land track L is provided with a pre-pit P. The pre-pit P in a land track L indicates the address of the inner-edge-side groove track G adjacent to the land track L. That is, when viewed from the groove track G, the pre-pit P in the outer-edge-side land track L adjacent to the groove track G indicates the address of the groove track G. The groove track G is a track in which marks showing various data can be recorded. Each track is wobbled at a specific frequency. Pre-pits are formed in synchronization with the wobble.

Furthermore, as shown in FIG. 4, the second recording layer 2 has land tracks L and groove tracks G formed alternately from the inner edge of the optical disk toward the outer edge. In the second recording layer 2, a groove track G is provided with a pre-pit P. The pre-pit P in a groove track G indicates the address of the inner-edge-side land track L adjacent to the groove track G. That is, when viewed from the land track L, the pre-pit P in the outer-edge-side groove track G adjacent to the groove track G indicates the address of the land track L. The land track L is a track in which marks showing various data can be recorded. Each track is wobbled at a specific frequency. Pre-pits are formed in synchronization with the wobble.

Specifically, in the optical disk whose pre-pits have the same polarity in the first recording layer 1 and second recording layer 2, the pre-pit P of each recording layer indicates the address of the inner-edge-side track adjacent to the track having the pre-pit P. That is, when viewed from the track without a pre-pit P, the pre-pit P in the outer-edge-side track adjacent to the track without a pre-pit P indicates the address of the track without a pre-pit P.

The optical disk may be the reversal of that in the above explanation. Specifically, in an optical disk whose pre-pits have the same polarity in the first recording layer 1 and second recording layer 2, a pre-pit P of each recording layer may indicate the address of the outer-edge-side track adjacent to the track having the pre-pit P. That is, when viewed from the track without a pre-pit P, the pre-pit P in the inner-edge-side track adjacent to the track without a pre-pit P may indicate the address of the track without a pre-pit P.

Next, an explanation will be given of an optical disk where the polarity of the pre-pits in the first recording layer 1 is different from (or opposite to) the polarity of the pre-pits in the second recording layer 2.

As shown in FIG. 3, the first recording layer 1 has a plurality of land tracks L and a plurality of groove tracks G formed alternately from the inner edge toward the outer edge. In the first recording layer 1, a land track L is provided with a pre-pit P. The pre-pit P in a land track L indicates the address of the inner-edge-side groove track G adjacent to the land track L. That is, when viewed from the groove track G, the pre-pit P in the outer-edge-side land track L adjacent to the groove track G indicates the address of the groove track G.

Furthermore, as shown in FIG. 4, the second recording layer 2 has land tracks L and groove tracks G formed alternately from the inner edge toward the outer edge. In the second recording layer 2, a groove track G is provided with a pre-pit P. The pre-pit P in a groove track G indicates the address of the outer-edge-side land track L adjacent to the groove track G. That is, when viewed from the land track L, the pre-pit P in the inner-edge-side groove track G adjacent to the land track L indicates the address of the land track L.

Specifically, in an optical disk where the polarity of the pre-pits in the first recording layer 1 is different from the polarity of the pre-pits in the second recording layer 2, a pre-pit P in the first recording layer 1 indicates the address of the inner-edge-side track adjacent to the track with the pre-pit P, whereas a pre-pit P in the second recording layer indicates the address of the outer-edge-side track adjacent to the track with the pre-pit P. That is, when viewed from the track without a pre-pit P, a pre-pit P in the outer-edge-side track adjacent to the track without a pre-pit P in the first recording layer 1 indicates the address of the track without a pre-pit P and a pre-pit P in the inner-edge-side track adjacent to the track without a pre-pit P in the second recording layer 2 indicates the address of the track without a pre-pit P.

The optical disk may be the reversal of that in the above explanation. Specifically, in the optical disk where the polarity of the pre-pits in the first recording layer 1 is different from the polarity of the pre-pits in the second recording layer 2, a pre-pit P in the first recording layer may indicate the address of the outer-edge-side track adjacent to the track with the pre-pit P and a pre-pit P in the second recording layer 2 may indicate the address of the inner-edge-side track adjacent to the track with the pre-pit P. That is, when viewed from the track without a pre-pit P, the pre-pit P in the inner-edge-side track adjacent to the track without a pre-pit P in the first recording layer 1 may indicate the address of the track without a pre-pit P and the pre-pit P in the outer-edge-side track adjacent to the track without a pre-pit P in the second recording layer 2 may indicate the address of the track without a pre-pit 2.

The optical disk whose pre-pits have the same polarity in the first recording layer 1 and second recording layer 2 has pre-pit polarity information that indicates the pre-pits have the same polarity. Specifically, in the area A1 of the optical disk whose pre-pits have the same polarity in the first recording layer 1 and second recording layer 2, pre-pit polarity information is recorded that indicates the pre-pits in the first recording layer 1 and second recording layer 2 have the same polarity (a pre-pit always indicates the address of the outer-edge-side [or inner-edge-side] track adjacent to the track in which the pre-pit is placed).

In contrast, the optical disk where the polarity of the pre-pits in the first recording layer 1 is different from the polarity of the pre-pits in the second recording layer 2 has pre-pit polarity information that indicates the pre-pits differ in polarity between the first recording layer 1 and the second recording layer 2. Specifically, in the area A1 of the optical disk whose pre-pits differ in polarity between the first recording layer 1 and the second recording layer 2, pre-pit polarity information is recorded that indicates the polarity of the pre-pits in the first recording layer 1 is different from the polarity of the pre-pits in the second recording layer 2 (a pre-pit in the first recording layer indicates the address of the outer-edge-side [or inner-edge-side] track adjacent to the track in which the pre-pit is placed and a pre-pit in the second recording layer indicates the address of the inner-edge-side [or outer-edge-side] track adjacent to the track in which the pre-pit is placed).

Furthermore, in the area A2 on the first recording layer 1 of the same-polarity optical disk and different-polarity optical disk, recording-layer identifying information that indicates the first recording layer is recorded. Similarly, in the area A2 on the second recording layer 2 of the same-polarity optical disk and different-polarity optical disk, recording-layer identifying information that indicates the second recording layer is recorded.

With the above configuration, the optical disk apparatus which processes the optical disk can determine whether the optical disk to be processed is of the same polarity type or the different polarity type by acquiring the pre-pit polarity information recorded in the area A1. Moreover, the optical disk apparatus which processes the optical disk can determine whether the recording layer of the optical disk to be processed is the first recording layer 1 or the second recording layer 2 by acquiring the recording-layer identifying information recorded in the area A2.

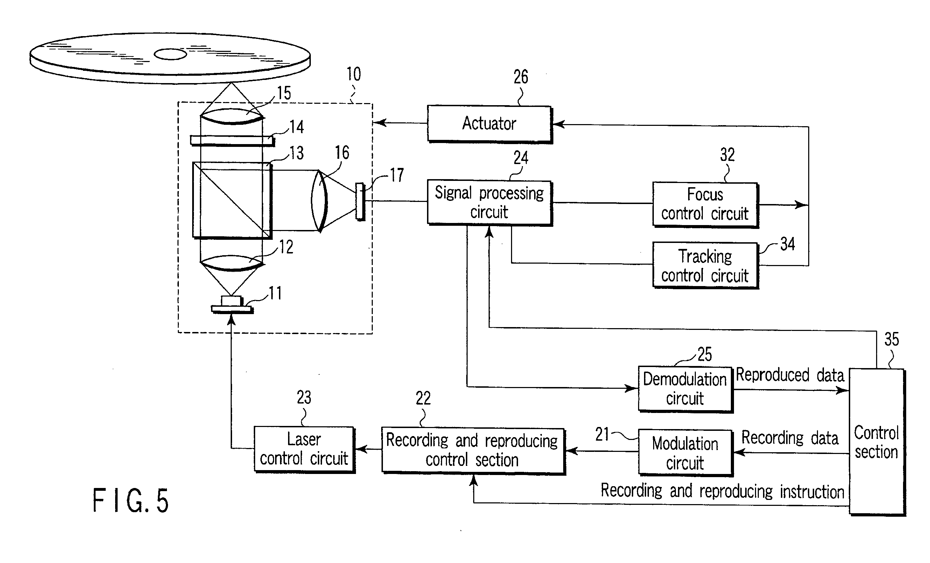

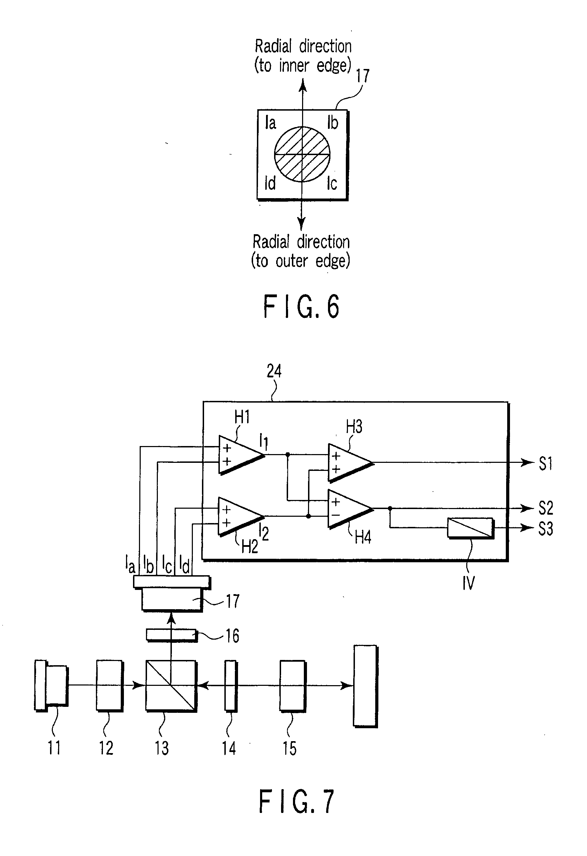

Next, referring to FIGS. 5 to 7, a schematic configuration of the optical disk apparatus according to the embodiment will be explained. FIG. 5 schematically shows the configuration of the optical disk apparatus according to the embodiment. FIG. 6 shows an example of a 4-quadrant photodetector constituting a light detector in the optical disk apparatus of FIG. 5. FIG. 7 shows an example of a signal processing circuit in the optical disk apparatus of FIG. 5. The optical disk apparatus records information onto the optical disk explained above or reproduces the information recorded on the optical disk.

As shown in FIG. 5, the optical disk apparatus comprises an optical pickup 10, a modulation circuit 21, a recording and reproducing control section 22, a laser control circuit 23, a signal processing circuit 24, a demodulation circuit 25, an actuator 26, a focus control circuit 32, a tracking control circuit 34, and a control section 35.

The optical pickup 10 includes a laser 11, a collimate lens 12, a polarization beam splitter (hereinafter, referred to as PBS) 13, a 1/4 wavelength plate 14, an objective 15, a condenser lens 16, and a light detector 17.

First, the way the optical disk apparatus records information onto the optical disk will be explained. The modulation circuit 21 modulates recording information (data symbols) provided by the control section 35 according to a specific modulation method into a channel bit train. The channel bit train corresponding to the recording information is input to the recording and reproducing section 22. Further input to the recording and reproducing section 22 is a recording and reproducing instruction (in this case, a recording instruction) from the control section 35. The recording and reproducing control section 22 outputs a control signal to the actuator 26 to drive the optical pickup so that the optical beam may be gathered suitably at the target recording position. Furthermore, the recording and reproducing control section 22 supplies a channel bit train to the laser control circuit 23. The laser control circuit 23 converts the channel bit train into a laser driving waveform, thereby driving the laser 11. That is, the laser control circuit 23 pulse-drives the laser 11. As a result, the laser 11 emits a recording optical beam corresponding to a desired bit train. The recording optical beam emitted from the laser 11 becomes parallel light at the collimate lens 12 and enters the PBS 13 and passes through it. The beam passed through the PBS 13 passes through the 1/4 wavelength plate 14 and is gathered by the objective 15 at the information recording surface (the first recording layer 1 or second recording layer 2) of the optical disk. The gathered recording optical beam is maintained in a state where the best microscopic spot is obtained on the recording surface by focus control performed by the focus control circuit 32 and actuator 26 and by tracking control performed by the tracking control circuit 34 and actuator 26.

Then, the way the optical disk apparatus reproduces the information from the optical disk will be explained. A recording and reproducing instruction (in this case, a reproducing instruction) from the control section 35 is input to the recording and reproducing control section 22. According to the reproducing instruction from the control section 35, the recording and reproducing control section 22 outputs a reproduction control signal to the laser control circuit 23. On the basis of the reproduction control signal, the laser control circuit 23 drives the laser 11. As a result, the laser 11 emits a reproducing optical beam. The reproducing optical beam emitted from the laser 11 becomes parallel light at the collimate lens 12, enters the PBS 13, and passes through the PBS 13. The light beam passed through the PBS 13 passes through the 1/4 wavelength plate 14 and is gathered by the objective 15 at the information recording surface of the optical disk. The gathered reproducing optical beam is maintained in a state where the best microscopic spot is obtained on the recording surface by focus control performed by the focus control circuit 32 and actuator 26 and by tracking control performed by the tracking control circuit 34 and actuator 26. At this time, the reproducing optical beam projected on the optical disk is reflected by the reflecting film or reflective recording film at the information recording surface. The reflected light passes through the objective 15 in the opposite direction and becomes parallel light again. The reflected light then passes through the 1/4 wavelength plate 14, has polarized light perpendicular to the incident light, and is reflected at the PBS 13. The beam reflected at the PBS 13 is turned into convergent light by the condenser lens 16 and enters the light detector 17. The light detector 17 is composed of, for example, a 4-quadrant photodetector. The beam entering the light detector 17 is converted photoelectrically into an electric signal, which is then amplified. The amplified signal is equalized and binarized at the signal processing circuit 24. The resulting signal is sent to the modulation circuit 25. The modulation circuit 25 modulates the signal according to a specific modulation method and outputs the reproduced data.

A focus error signal is generated on the basis of a part of the electric signal output from the light detector 17. Similarly, a tracking error signal is generated on the basis of a part of the electrical signal output from the light detector 17. The focus control signal 32 controls the actuator 28 on the basis of the focus error signal, thereby controlling the focus of the beam spot. The tracking control circuit 34 controls the actuator 28 on the basis of the tracking error signal, thereby controlling the tracking of the beam spot.

As shown in FIG. 6, the 4-quadrant photodetector constituting the light detector 17 outputs signals Ia, Ib, Ic, and Id. The signals Ia, Ib are obtained from the inner-edge side of a track as compared with the signals Ic, Id.

As shown in FIG. 7, the signal processing circuit 24 includes, for example, direct-current coupled amplifiers H1, H2, H3, H4, and a polarity inverter IV. The signal processing circuit 24 calculates a sum signal I1 (= Ia + Ib) of signals Ia and Ib and a sum signal I2 (= Ic + Id) of signals Ic and Id at the direct-current coupled amplifiers H1, H2, H3, H4. The signal processing circuit 24 further calculates a sum signal S1 (= I1 + I2) of the sum signal I1 and sum signal I2. The signal processing circuit 24 still further calculates a difference signal S2 (= I1 - I2) between the sum signal I1 and sum signal I2. The signal processing circuit 24 still further calculates a difference signal S3 by inverting the difference signal S2 at the polarity inverter IV.

The difference signal S2 is a signal obtained from the pre-pit in a land track L of the first recording layer adjacent to the outer-periphery of a groove track G of the first recording layer. Alternatively, the difference signal S2 is a signal obtained from the pre-pit in a groove track G of the second recording layer adjacent to the outer-periphery of a land track L of the second recording layer.

The difference signal S3 is a signal obtained from the pre-pit in a land track L of the first recording layer adjacent to the inner-periphery of a groove track G of the first recording layer. Alternatively, the difference signal S3 is a signal obtained from the pre-pit in a groove track G of the second recording layer adjacent to the inner-periphery of a land track L of the second recording layer.

On the basis of pre-pit information obtained from the area A1 of the optical disk and recording-layer identifying information obtained from the area A2, the optical disk apparatus selects one of the difference signals S2 and S3 and reproduces the pre-pit according to the selected difference signal. Specifically, on the basis of the pre-pit polarity information and recording-layer identifying information, the optical disk apparatus determines a method of detecting pre-pits in the first and second recording layers and reproduces an address from the pre-pits in the first and second recording layers by the determined detecting method.

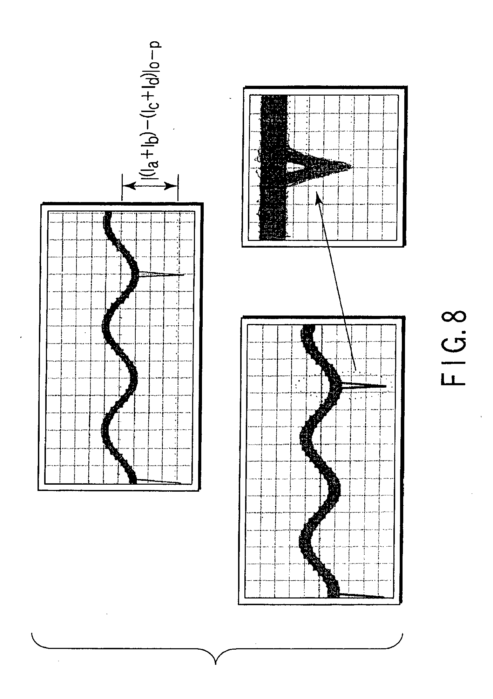

FIG. 8 shows an example of a difference signal (or pre-pit signal) selected by the optical disk apparatus. A pre-pit signal appears almost at the bottom of a wobble reflected in a track.

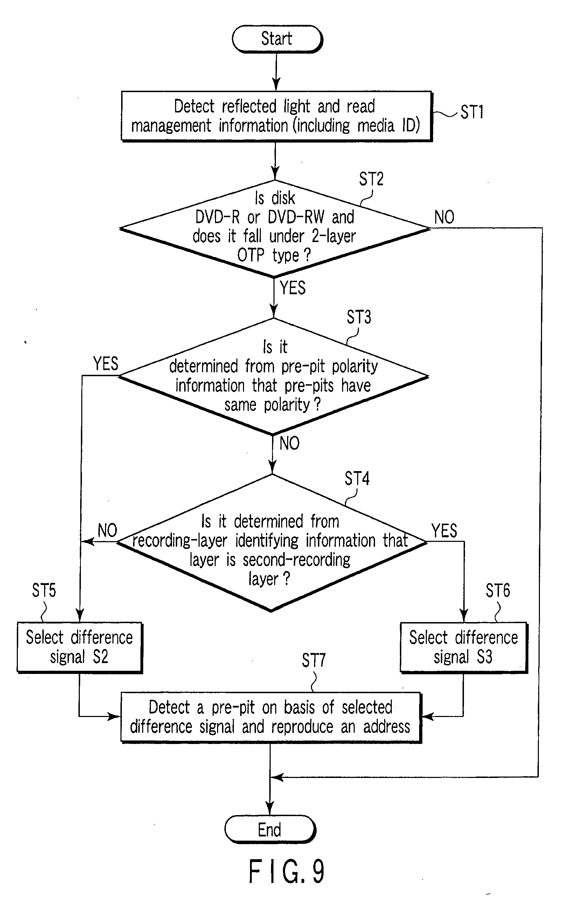

FIG. 9 is a flowchart to help explain the process of selecting a difference signal in the optical disk apparatus.

The optical disk apparatus irradiates the optical disk with the optical beam and detects the reflected light from the optical disk, thereby reading various pieces of information reflected in the reflected light. For example, the optical disk apparatus reads management information from a management information storage area A of the optical disk (ST1). The control section 35 of the optical disk apparatus determines the type or the like of the optical disk to be processed on the basis of the media ID included in the management information. If the optical disk to be processed is DVD-R or DVD-RW and falls under the OTP types of a plurality of recording layers (in the embodiment, two recording layer) (YES in ST2), a difference signal selecting process is carried out.

If the control section 35 of the optical disk apparatus has determined that the difference signal selecting process is necessary for the optical disk to be processed (YES in ST2), it determines on the basis of the pre-pit polarity information included in the management information whether the pre-pits in the first and second recording layers of the optical disk to be processed have the same polarity (ST3).

If the control section 35 of the optical disk apparatus has determined that the pre-pits in the first and second recording layers of the optical disk to be processed have the same polarity (YES in ST3), it selects the difference signal S2 (ST5). On the basis of the difference signal S2, the pre-pit is detected and reproduced (ST7). If the control section 35 of the optical disk apparatus has determined that the polarity of the pre-pits in the first recording layer of the optical disk to be processed is different from the polarity of the pre-pits in the second recording layer (NO in ST3), it determines on the basis of the recording-layer identifying information included in the management information which of the first recording layer and second recording layer is to be processed (ST4). If the control section 35 of the optical disk apparatus has determined that the first recording layer is to be processed (NO in ST4), it selects the difference signal S2 (ST5). On the difference signal S2, the pre-pit is detected and reproduced (ST7). If the control section 35 of the optical disk has determined that the second recording layer is to be processed (YES in ST4), it selects the difference signal S3 (ST6). On the basis of the difference signal S3, the pre-pit is detected and reproduced (ST7).

In the optical disk to be processed in the embodiment, the track of the first recording layer 1 spirals so as to do tracking from the inside of the disk to the outside, whereas the track of the second recording layer 2 spirals so as to do tracking from the outside of the disk to the inside. In the first recording layer 1 of the same-polarity optical disk, the address of a groove track G is obtained from the pre-pit in the land track L outside the groove track G. In the second recording layer 2, too, the address of a land track L is obtained from the pre-pit in the groove track G outside the land track L. In contrast, in the first recording layer 1 of the different-polarity optical disk, the address of a groove track G is obtained from the pre-pit in the land track L outside the groove track G. In the second recording layer 2, the address of a land track L is obtained from the pre-pit in the groove track G inside the land track L.

The optical disk apparatus of the embodiment changes the pre-pit detecting method on the basis of the pit polarity information and recording-layer identifying information obtained from the optical disk. This makes it possible to obtain the correct pre-pit signal and the correct address from both of the same-polarity optical disk and the different-polarity optical disk.

While in the embodiment, the output from the direct-current coupled amplifier H4 has been inverted in polarity by the polarity inverter IV, the present invention is not limited to this. For instance, the polarity of the input signal to the direct-current coupled amplifier H4 may be changed by a selector switch.

While in the embodiment, the pre-pit detecting method has been explained which determines whether to reproduce the pre-pit in the track on the inner-edge side of the target track as an address or the pre-pit in the track on the outer-edge side of the target track as an address, the present invention is not limited to the pre-pit detecting method. For instance, in HD-DVD (including HD-DVD-R and HD-DVD-RW) the formulation of whose standard has recently been in progress, track wobbles are used in place of pre-pits. In the track wobbles, addresses are reflected using phase modulation. That is, the present invention may be applied to a track wobble detecting method which determines whether to reproduce the track wobble on the inner-edge side of the target track as an address or the track wobble on the outer-edge side of the target track as an address.

## Claims

1. An optical disk comprising:
a first and a second recording layer (1, 2) in each of which first and second tracks (L, G) are formed alternately from the inner edge toward the outer edge, the first tracks of the first recording layer having pits (P) which indicate the addresses of the second tracks of the first recording layer adjacent to the inner periphery of the first tracks of the first recording layer, the second tracks of the second recording layer having pits (P) which indicate the addresses of the first tracks of the second recording layer adjacent to the inner periphery of the second tracks of the second recording layer, and the second tracks of the first recording layer and the first tracks of the second recording layer being tracks in which marks representing various types of data can be recorded;
a first area (A1) in which pit polarity information has been recorded that indicates the pits in the first tracks of the first recording layer indicate the addresses of the second tracks of the first recording layer adjacent to the inner periphery of the first tracks of the first recording layer and the pits in the second tracks of the second recording layer indicate the addresses of the first tracks of the second recording layer adjacent to the inner periphery of the second tracks of the second recording layer; and
a second area (A2) in which recording-layer identifying information to identify the first and second recording layers has been recorded.

2. The optical disk according to claim 1, **characterized in that**
the first tracks are land tracks, and
the second tracks are groove tracks.

3. An optical disk comprising:
a first and a second recording layer (1, 2) in each of which first and second tracks (L, G) are formed alternately from the inner edge toward the outer edge, the first tracks of the first recording layer having pits (P) which indicate the addresses of the second tracks of the first recording layer adjacent to the inner periphery of the first tracks of the first recording layer, the second tracks of the second recording layer having pits (P) which indicate the addresses of the first tracks of the second recording layer adjacent to the outer periphery of the second tracks of the second recording layer, and the second tracks of the first recording layer and the first tracks of the second recording layer being tracks in which marks representing various types of data can be recorded;
a first area (A1) in which pit polarity information has been recorded that indicates the pits in the first tracks of the first recording layer indicate the addresses of the second tracks of the first recording layer adjacent to the inner periphery of the first tracks of the first recording layer and the pits in the second tracks of the second recording layer indicate the addresses of the first tracks of the second recording layer adjacent to the outer periphery of the second tracks of the second recording layer; and
a second area (A2) in which recording-layer identifying information to identify the first and second recording layers has been recorded.

4. The optical disk according to claim 3, **characterized in that**
the first tracks are land tracks, and
the second tracks are groove tracks.

5. An optical disk apparatus which processes an optical disk having a first and a second recording layer in each of which first and second tracks are formed alternately from the inner edge toward the outer edge, the optical disk apparatus comprising:
a detecting unit (10) configured to detect the reflected light from an optical disk where pits indicating addresses are recorded in the first tracks of the first recording layer, pits indicating addresses are recorded in the second tracks of the second recording layer, and marks indicating various types of data can be recorded in the second tracks of the first recording layer and in the first tracks of the second recording layer;
a decision unit (35) configured to determine a method of detecting the pits in the first and second recording layers on the basis of pit polarity information indicating the polarity of the pits included in the information reflected in the reflected light detected by the detecting unit and of recording-layer identifying information to identify the first and second recording layers; and
a reproducing unit (25) configured to reproduce addresses from the pits in the first and second recording layers by the detecting method determined by the decision unit.

6. The optical disk apparatus according to claim 5, **characterized in that** the reproducing unit includes
a first reproducing unit (H1, H2, H4) configured to reproduce the pits in the first tracks of the first recording layer adjacent to the outer periphery of the second tracks of the first recording layer and the pits in the second tracks of the second recording layer adjacent to the outer periphery of the first tracks of the second recording layer, and
a second reproducing unit (H1, H2, H4, IV) configured to reproduce the pits in the first tracks of the first recording layer adjacent to the inner periphery of the second tracks of the first recording layer and the pits in the second tracks of the second recording layer adjacent to the inner periphery of the first tracks of the second recording layer, and
reproduces the pits in the first tracks of the first recording layer adjacent to the outer periphery of the second tracks in the first recording layer and the pits in the second tracks of the second recording layer adjacent to the outer periphery of the first tracks in the second recording layer on the basis of the polarity information indicating that the pits in the first and second recording layers have the same polarity.

7. The optical disk apparatus according to claim 5, **characterized in that** the reproducing unit includes
a first reproducing unit (H1, H2, H4) configured to reproduce the pits in the first tracks of the first recording layer adjacent to the outer periphery of the second tracks of the first recording layer and the pits in the second tracks of the second recording layer adjacent to the outer periphery of the first tracks of the second recording layer, and
a second reproducing unit (H1, H2, H4, IV) configured to reproduce the pits in the first tracks of the first recording layer adjacent to the inner periphery of the second tracks of the first recording layer and the pits in the second tracks of the second recording layer adjacent to the inner periphery of the first tracks of the second recording layer, and
reproduces the pits in the first tracks of the first recording layer adjacent to the outer periphery of the second tracks in the first recording layer and the pits in the second tracks of the second recording layer adjacent to the inner periphery of the first tracks in the second recording layer on the basis of the polarity information indicating that the polarity of the pits in the first recording layer differs from the polarity of the pits in the second recording layer.

8. The optical disk apparatus according to claim 5, **characterized in that**
the first tracks are land tracks, and
the second tracks are groove tracks.

9. An optical disk processing method of processing an optical disk having a first and a second recording layer in each of which first and second tracks are formed alternately from the inner edge toward the outer edge, the optical disk processing method comprising:
detecting the reflected light from an optical disk where pits indicating addresses are recorded in the first tracks of the first recording layer, pits indicating addresses are recorded in the second tracks of the second recording layer, and marks indicating various types of data can be recorded in the second tracks of the first recording layer and in the first tracks of the second recording layer (ST1); and
determining a method of detecting the pits in the first and second recording layers on the basis of pit polarity information indicating the polarity of the pits included in the information reflected in the detected reflected light and of recording-layer identifying information to identify the first and second recording layers and reproducing addresses from the pits in the first and second recording layers by the determined detecting method (ST3 to ST7).

10. The optical disk processing method according to claim 9, **characterized by** further comprising:
reproducing the pits in the first tracks of the first recording layer adjacent to the outer periphery of the second tracks of the first recording layer (ST5, ST7) and the pits in the second tracks of the second recording layer adjacent to the outer periphery of the first tracks in the second recording layer (ST5, ST7) on the basis of polarity information indicating that the pits in the first and second recording layers have the same polarity (YES in ST3).

11. The optical disk processing method according to claim 9, **characterized by** further comprising:
reproducing the pits in the first tracks of the first recording layer adjacent to the outer periphery of the second tracks in the first recording layer (NO in ST4, ST5, ST7) and the pits in the second tracks of the second recording layer adjacent to the inner periphery of the first tracks in the second recording layer (YES in ST4, ST6, ST7) on the basis of the polarity information indicating that the polarity of the pits in the first recording layer differs from the polarity of the pits in the second recording layer (NO in ST3).

12. The optical disk processing method according to claim 9, **characterized in that**
the first tracks are land tracks, and
the second tracks are groove tracks.

## Patentansprüche

1. Optische Platte aufweisend:
eine erste und eine zweite Aufzeichnungsschicht (1, 2), in welchen erste und zweite Spuren (L, G) alternierend von der Innenkante zu der Außenkante ausgebildet sind, wobei die ersten Spuren der ersten Aufzeichnungsschicht Pits (P) aufweisen, welche die Adressen der zweiten Spuren der ersten Aufzeichnungsschicht neben dem inneren Umfang der ersten Spuren der ersten Aufzeichnungsschicht anzeigen, wobei die zweiten Spuren der zweiten Aufzeichnungsschicht Pits (P) aufweisen, welche die Adressen der ersten Spuren der zweiten Aufzeichnungsschicht neben dem inneren Umfang der zweiten Spuren der zweiten Aufzeichnungsschicht anzeigen, und die zweiten Spuren der ersten Aufzeichnungsschicht und die ersten Spuren der zweiten Aufzeichnungsschicht Spuren sind, in welchen Markierungen aufgezeichnet werden können, die verschiedene Typen von Daten darstellen;
ein erstes Gebiet (A1), in welchem Pit-Polaritätsinformationen aufgezeichnet worden sind, welche die Pits in den ersten Spuren der ersten Aufzeichnungsschicht anzeigen, welche die Adressen der zweiten Spuren der ersten Aufzeichnungsschicht neben dem inneren Umfang der ersten Spuren der ersten Aufzeichnungsschicht anzeigen, und die Pits in den zweiten Spuren der zweiten Aufzeichnungsschicht die Adressen der ersten Spuren der zweiten Aufzeichnungsschicht neben dem inneren Umfang der zweiten Spuren der zweiten Aufzeichnungsschicht anzeigen; und
ein zweites Gebiet (A2), in welchem Aufzeichnungsschicht-Identifizierungsinformationen zum Identifizieren der ersten und zweiten Aufzeichnungsschichten aufgezeichnet worden sind.

2. Optische Platte nach Anspruch 1, **dadurch gekennzeichnet, dass**
die ersten Spuren Landspuren sind, und
die zweiten Spuren Rillenspuren sind.

3. Optische Platte aufweisend:
eine erste und eine zweite Aufzeichnungsschicht (1, 2), in welchen erste und zweite Spuren (L, G) alternierend von der Innenkante zu der Außenkante ausgebildet sind, wobei die ersten Spuren der ersten Aufzeichnungsschicht Pits (P) aufweisen, welche die Adressen der zweiten Spuren der ersten Aufzeichnungsschicht neben dem inneren Umfang der ersten Spuren der ersten Aufzeichnungsschicht anzeigen, wobei die zweiten Spuren der zweiten Aufzeichnungsschicht Pits (P) aufweisen, welche die Adressen der ersten Spuren der zweiten Aufzeichnungsschicht neben dem äußeren Umfang der zweiten Spuren der zweiten Aufzeichnungsschicht anzeigen, und die zweiten Spuren der ersten Aufzeichnungsschicht und die ersten Spuren der zweiten Aufzeichnungsschicht Spuren sind, in welchen Markierungen aufgezeichnet werden können, die verschiedene Typen von Daten darstellen;
ein erstes Gebiet (A1), in welchem Pit-Polaritätsinformationen aufgezeichnet worden sind, welche die Pits in den ersten Spuren der ersten Aufzeichnungsschicht anzeigen, welche die Adressen der zweiten Spuren der ersten Aufzeichnungsschicht neben dem inneren Umfang der ersten Spuren der ersten Aufzeichnungsschicht anzeigen, und die Pits in den zweiten Spuren der zweiten Aufzeichnungsschicht die Adressen der ersten Spuren der zweiten Aufzeichnungsschicht neben dem äußeren Umfang der zweiten Spuren der zweiten Aufzeichnungsschicht anzeigen; und
ein zweites Gebiet (A2), in welchem Aufzeichnungsschicht-Identifizierungsinformationen zum Identifizieren der ersten und zweiten Aufzeichnungsschichten aufgezeichnet worden sind.

4. Optische Platte nach Anspruch 3, **dadurch gekennzeichnet, dass**
die ersten Spuren Landspuren sind, und
die zweiten Spuren Rillenspuren sind.

5. Optische-Platte-Vorrichtung, welche eine optische Platte mit einer ersten und einer zweiten Aufzeichnungsschicht verarbeitet, in welchen erste und zweite Spuren alternierend von der inneren Kante zu der äußeren Kante ausgebildet sind, wobei die optische-Platte-Vorrichtung aufweist:
eine Erfassungseinheit (10), die konfiguriert ist, um das von einer optischen Platte reflektierte Licht zu erfassen, wobei Pits, die Adressen anzeigen, in den ersten Spuren der ersten Aufzeichnungsschicht aufgezeichnet sind, Pits, die Adressen anzeigen, in den zweiten Spuren der zweiten Aufzeichnungsschicht aufgezeichnet sind, und Markierungen, die verschiedene Typen von Daten anzeigen, in den zweiten Spuren der ersten Aufzeichnungsschicht und in den ersten Spuren der zweiten Auszeichnungsschicht aufgezeichnet werden können;
eine Entscheidungseinheit (35), die konfiguriert ist, um ein Verfahren zum Erfassen der Pits in den ersten und zweiten Aufzeichnungsschichten auf der Basis von Pit-Polaritätsinformationen, welche die Polarität der Pits anzeigen, die in den Informationen enthalten ist, die in dem reflektierten Licht reflektiert sind, das durch die Erfassungseinheit erfasst ist, und von Aufzeichnungsschicht-Identifizierungsinformationen zu bestimmen, um die ersten und zweiten Aufzeichnungsschichten zu identifizieren; und
eine Reproduktionseinheit (25), die konfiguriert ist, um Adressen von den Pits in den ersten und zweiten Aufzeichnungsschichten durch das Erfassungsverfahren, das durch die Entscheidungseinheit bestimmt ist, zu reproduzieren.

6. Optische-Platte-Vorrichtung nach Anspruch 5, **dadurch gekennzeichnet, dass** die Reproduktionseinheit umfasst:
eine erste Reproduktionseinheit (H1, H2, H4), die konfiguriert ist, um die Pits in den ersten Spuren der ersten Aufzeichnungsschicht neben dem äußeren Umfang der zweiten Spuren der ersten Aufzeichnungsschicht und die Pits in den zweiten Spuren der zweiten Aufzeichnungsschicht neben dem äußeren Umfang der ersten Spuren der zweiten Aufzeichnungsschicht zu reproduzieren, und
eine zweite Reproduktionseinheit (H1, H2, H4, IV), die konfiguriert ist, um die Pits in den ersten Spuren der ersten Aufzeichnungsschicht neben dem inneren Umfang der zweiten Spuren der ersten Aufzeichnungsschicht und die Pits in den zweiten Spuren der zweiten Aufzeichnungsschicht neben dem inneren Umfang der ersten Spuren der zweiten Aufzeichnungsschicht zu reproduzieren, und
die Pits in den ersten Spuren der ersten Aufzeichnungsschicht neben dem äußeren Umfang der zweiten Spuren in der ersten Aufzeichnungsschicht und die Pits in den zweiten Spuren der zweiten Aufzeichnungsschicht neben dem äußeren Umfang der ersten Spuren in der zweiten Aufzeichnungsschicht auf der Basis der Polaritätsinformationen reproduziert, die anzeigen, dass die Pits in den ersten und zweiten Aufzeichnungsschichten dieselbe Polarität aufweisen.

7. Optische-Platte-Vorrichtung nach Anspruch 5, **dadurch gekennzeichnet, dass** die Reproduktionseinheit umfasst:
eine erste Reproduktionseinheit (H1, H2, H4), die konfiguriert ist, um die Pits in den ersten Spuren der ersten Aufzeichnungsschicht neben dem äußeren Umfang der zweiten Spuren der ersten Aufzeichnungsschicht und die Pits in den zweiten Spuren der zweiten Aufzeichnungsschicht neben dem äußeren Umfang der ersten Spuren der zweiten Aufzeichnungsschicht zu reproduzieren, und
eine zweite Reproduktionseinheit (H1, H2, H4, IV), die konfiguriert ist, um die Pits in den ersten Spuren der ersten Aufzeichnungsschicht neben dem inneren Umfang der zweiten Spuren der ersten Aufzeichnungsschicht und die Pits in den zweiten Spuren der zweiten Aufzeichnungsschicht neben dem inneren Umfang der ersten Spuren der zweiten Aufzeichnungsschicht zu reproduzieren, und
die Pits in den ersten Spuren der ersten Aufzeichnungsschicht neben dem äußeren Umfang der zweiten Spuren in der ersten Aufzeichnungsschicht und die Pits in den zweiten Spuren der zweiten Aufzeichnungsschicht neben dem inneren Umfang der ersten Spuren in der zweiten Aufzeichnungsschicht auf der Basis der Polaritätsinformationen reproduziert, die anzeigen, dass die Polarität der Pits in der ersten Aufzeichnungsschicht von der Polarität der Pits in der zweiten Aufzeichnungsschicht verschieden ist.

8. Optische-Platte-Vorrichtung nach Anspruch 5, **dadurch gekennzeichnet, dass**
die ersten Spuren Landspuren sind, und
die zweiten Spuren Rillenspuren sind.

9. Optische-Platte-Verarbeitungsverfahren zum Verarbeiten einer optischen Platte mit einer ersten und einer zweiten Aufzeichnungsschicht, in welchen erste und zweite Spuren alternierend von der inneren Kante zu der äußeren Kante ausgebildet sind, wobei das Optische-Platte-Verarbeitungsverfahren aufweist:
Erfassen des reflektierten Lichts von einer optischen Platte, wobei Pits, die Adressen anzeigen, in den ersten Spuren der ersten Aufzeichnungsschicht aufgezeichnet sind, Pits, die Adressen anzeigen, in den zweiten Spuren der zweiten Aufzeichnungsschicht aufgezeichnet sind, und Markierungen, die verschiedene Typen von Daten anzeigen, in den zweiten Spuren der ersten Aufzeichnungsschicht und in den ersten Spuren der zweiten Aufzeichnungsschicht aufgezeichnet werden können (ST1); und
Bestimmen eines Verfahrens zum Erfassen der Pits in den ersten und zweiten Aufzeichnungsschichten auf der Basis von Pit-Polaritätsinformationen, welche die Polarität der Pits anzeigen, die in den Informationen enthalten ist, die in dem erfassten reflektierten Licht reflektiert sind, und von Aufzeichnungsschicht-Identifikationsinformationen, um die ersten und zweiten Aufzeichnungsschichten und Reproduktionsadressen von den Pits in den ersten und zweiten Aufzeichnungsschichten durch das bestimmte Erfassungsverfahren zu identifizieren (ST3 bis ST7).

10. Optische-Platte-Verarbeitungsverfahren nach Anspruch 9, ferner aufweisend:
Reproduzieren der Pits in den ersten Spuren der ersten Aufzeichnungsschicht neben dem äußeren Umfang der zweiten Spuren der ersten Aufzeichnungsschicht (ST5, ST7), und der Pits in den zweiten Spuren der zweiten Aufzeichnungsschicht neben dem äußeren Umfang der ersten Spuren in der zweiten Aufzeichnungsschicht (ST5, ST7) auf der Basis von Polaritätsinformationen, die anzeigen, dass die Pits in den ersten und zweiten Aufzeichnungsschichten dieselbe Polarität aufweisen (JA in ST3).

11. Optische-Platte-Verarbeitungsverfahren nach Anspruch 9, ferner aufweisend:
Reproduzieren der Pits in den ersten Spuren der ersten Aufzeichnungsschicht neben dem äußeren Umfang der zweiten Spuren in der ersten Aufzeichnungsschicht (NEIN in ST4, ST5, ST7) und der Pits in den zweiten Spuren der zweiten Aufzeichnungsschicht neben dem inneren Umfang der ersten Spuren in der zweiten Aufzeichnungsschicht (JA in ST4, ST6, ST7) auf der Basis der Polaritätsinformationen, die anzeigen, dass die Polarität der Pits in der ersten Aufzeichnungsschicht von der Polarität der Pits in der zweiten Aufzeichnungsschicht verschieden ist (NEIN in ST3).

12. Optische-Platte-Verarbeitungsverfahren nach Anspruch 9, **dadurch gekennzeichnet, dass**
die ersten Spuren Landspuren sind, und
die zweiten Spuren Rillenspuren sind.

## Revendications

1. Disque optique comprenant :
une première et une seconde couche d'enregistrement (1, 2), dans chacune desquelles des première et seconde pistes (L, G) sont formées alternativement depuis le bord interne vers le bord externe, les premières pistes de la première couche d'enregistrement comportant des dépressions (P) qui indiquent les adresses des secondes pistes de la première couche d'enregistrement adjacentes à la périphérie interne des premières pistes de la première couche d'enregistrement, les secondes pistes de la seconde couche d'enregistrement comportant des dépressions (P) qui indiquent les adresses des premières pistes de la seconde couche d'enregistrement adjacentes à la périphérie interne des secondes pistes de la seconde couche d'enregistrement, et les secondes pistes de la première couche d'enregistrement et les premières pistes de la seconde couche d'enregistrement étant des pistes dans lesquels des marques représentant divers types de données peuvent être enregistrées ;
une première zone (A1) dans laquelle des informations de polarité de dépression ont été enregistrées, qui indiquent que les dépressions dans les premières pistes de la première couche d'enregistrement indiquent les adresses des secondes pistes de la première couche d'enregistrement adjacentes à la périphérie interne des premières pistes de la première couche d'enregistrement et les dépressions dans les secondes pistes de la seconde couche d'enregistrement indiquent les adresses des premières pistes de la seconde couche d'enregistrement adjacentes à la périphérie interne des secondes pistes de la seconde couche d'enregistrement ; et
une seconde zone (A2) dans laquelle ont été enregistrées des informations d'identification de couche d'enregistrement pour identifier les première et seconde couches d'enregistrement.

2. Disque optique selon la revendication 1, **caractérisé en ce que**
les premières pistes sont des pistes d'espace vierge, et les secondes pistes sont des pistes de sillon.

3. Disque optique comprenant :
une première et une seconde couche d'enregistrement (1, 2), dans chacune desquelles des première et seconde pistes (L, G) sont formées alternativement depuis le bord interne vers le bord externe, les premières pistes de la première couche d'enregistrement comportant des dépressions (P) qui indiquent les adresses des secondes pistes de la première couche d'enregistrement adjacentes à la périphérie interne des premières pistes de la première couche d'enregistrement, les secondes pistes de la seconde couche d'enregistrement comportant des dépressions (P) qui indiquent les adresses des premières pistes de la seconde couche d'enregistrement adjacentes à la périphérie externe des secondes pistes de la seconde couche d'enregistrement, et les secondes pistes de la première couche d'enregistrement et les premières pistes de la seconde couche d'enregistrement étant des pistes dans lesquels des marques représentant divers types de données peuvent être enregistrées ;
une première zone (A1) dans laquelle des informations de polarité de dépression ont été enregistrées, qui indiquent que les dépressions dans les premières pistes de la première couche d'enregistrement indiquent les adresses des secondes pistes de la première couche d'enregistrement adjacentes à la périphérie interne des premières pistes de la première couche d'enregistrement et les dépressions dans les secondes pistes de la seconde couche d'enregistrement indiquent les adresses des premières pistes de la seconde couche d'enregistrement adjacentes à la périphérie externe des secondes pistes de la seconde couche d'enregistrement ; et
une seconde zone (A2) dans laquelle ont été enregistrées des informations d'identification de couche d'enregistrement pour identifier les première et seconde couches d'enregistrement.

4. Disque optique selon la revendication 3, **caractérisé en ce que**
les premières pistes sont des pistes d'espace vierge, et les secondes pistes sont des pistes de sillon.

5. Appareil à disque optique qui traite un disque optique comportant une première et une seconde couche d'enregistrement, dans chacune desquelles des première et seconde pistes sont formées alternativement depuis le bord interne vers le bord externe, l'appareil à disque optique comprenant :
une unité de détection (10) configurée pour détecter la lumière réfléchie par un disque optique où des dépressions indiquant des adresses sont enregistrées dans les premières pistes de la première couche d'enregistrement, des dépressions indiquant des adresses sont enregistrées dans les secondes pistes de la seconde couche d'enregistrement, et des marques indiquant divers types de données peuvent être enregistrées dans les secondes pistes de la première couche d'enregistrement et dans les premières pistes de la seconde couche d'enregistrement ;
une unité de décision (35) configurée pour déterminer un procédé de détection des dépressions dans les première et seconde couches d'enregistrement en se basant sur les informations de polarité de dépression indiquant la polarité des dépressions incluses dans les informations réfléchies dans la lumière réfléchie détectée par l'unité de détection et sur des informations d'identification de couche d'enregistrement pour identifier les première et seconde couches d'enregistrement ; et
une unité de reproduction (25) configurée pour reproduire les adresses d'après les dépressions dans les première et seconde couches d'enregistrement par le procédé de détection déterminé par l'unité de décision.

6. Appareil à disque optique selon la revendication 5, **caractérisé en ce que** l'unité de reproduction comporte
une première unité de reproduction (H1, H2, H4) configurée pour reproduire les dépressions dans les premières pistes de la première couche d'enregistrement adjacentes à la périphérie externe des secondes pistes de la première couche d'enregistrement et les dépressions dans les secondes pistes de la seconde couche d'enregistrement adjacentes à la périphérie externe des premières pistes de la seconde couche d'enregistrement ; et
une seconde unité de reproduction (H1, H2, H4, IV) configurée pour reproduire les dépressions dans les premières pistes de la première couche d'enregistrement adjacentes à la périphérie interne des secondes pistes de la première couche d'enregistrement et les dépressions dans les secondes pistes de la seconde couche d'enregistrement adjacentes à la périphérie interne des premières pistes de la seconde couche d'enregistrement, et
reproduit les dépressions dans les premières pistes de la première couche d'enregistrement adjacentes à la périphérie externe des secondes pistes dans la première couche d'enregistrement et les dépressions dans les secondes pistes de la seconde couche d'enregistrement adjacentes à la périphérie externe des premières pistes dans la seconde couche d'enregistrement en se basant sur les informations de polarité indiquant que les dépressions dans les première et seconde couches d'enregistrement ont la même polarité.

7. Appareil à disque optique selon la revendication 5, **caractérisé en ce que** l'unité de reproduction comporte
une première unité de reproduction (H1, H2, H4) configurée pour reproduire les dépressions dans les premières pistes de la première couche d'enregistrement adjacentes à la périphérie externe des secondes pistes de la première couche d'enregistrement et les dépressions dans les secondes pistes de la seconde couche d'enregistrement adjacentes à la périphérie externe des premières pistes de la seconde couche d'enregistrement, et
une seconde unité de reproduction (H1, H2, H4, IV) configurée pour reproduire les dépressions dans les premières pistes de la première couche d'enregistrement adjacentes à la périphérie interne des secondes pistes de la première couche d'enregistrement et les dépressions dans les secondes pistes de la seconde couche d'enregistrement adjacentes à la périphérie interne des premières pistes de la seconde couche d'enregistrement, et
reproduit les dépressions dans les premières pistes de la première couche d'enregistrement adjacentes à la périphérie externe des secondes pistes dans la première couche d'enregistrement et les dépressions dans les secondes pistes de la seconde couche d'enregistrement adjacentes à la périphérie interne des premières pistes dans la seconde couche d'enregistrement en se basant sur les informations de polarité indiquant que la polarité des dépressions dans la première couche d'enregistrement diffère de la polarité des dépressions dans la seconde couche d'enregistrement.

8. Appareil à disque optique selon la revendication 5, **caractérisé en ce que**
les premières pistes sont des pistes d'espace vierge, et les secondes pistes sont des pistes de sillon.

9. Procédé de traitement de disque optique pour traiter un disque optique comportant une première et une seconde couche d'enregistrement dans chacune desquelles des première et seconde pistes sont formées alternativement depuis le bord interne vers le bord externe, le procédé de traitement de disque optique comprenant :
la détection de la lumière réfléchie par un disque optique où des dépressions indiquant des adresses sont enregistrées dans les premières pistes de la première couche d'enregistrement, des dépressions indiquant des adresses sont enregistrées dans les secondes pistes de la seconde couche d'enregistrement et des marques indiquant divers types de données peuvent être enregistrées dans les secondes pistes de la première couche d'enregistrement et dans les premières pistes de la seconde couche d'enregistrement (ST1) ; et
la détermination d'un procédé de détection des dépressions dans les première et seconde couches d'enregistrement en se basant sur les informations de polarité de dépression indiquant la polarité des dépressions incluses dans les informations réfléchies dans la lumière réfléchie détectée et sur des informations d'identification de couche d'enregistrement pour identifier les première et seconde couches d'enregistrement, et la reproduction des adresses d'après les dépressions dans les première et seconde couches d'enregistrement par le procédé de détection déterminé (ST3 à ST7).

10. Procédé de traitement de disque optique selon la revendication 9, **caractérisé en ce qu'**il comprend en outre :
la reproduction des dépressions dans les premières pistes de la première couche d'enregistrement adjacentes à la périphérie externe des secondes pistes de la première couche d'enregistrement (ST5, ST7) et des dépressions dans les secondes pistes de la seconde couche d'enregistrement adjacentes à la périphérie externe des premières pistes de la seconde couche d'enregistrement (ST5, ST7) en se basant sur les informations de polarité indiquant que les dépressions dans les première et seconde couches d'enregistrement ont la même polarité (OUI en ST3).

11. Procédé de traitement de disque optique selon la revendication 9, **caractérisé en ce qu'**il comprend en outre :
la reproduction des dépressions dans les premières pistes de la première couche d'enregistrement adjacentes à la périphérie externe des secondes pistes de la première couche d'enregistrement (NON en ST4, ST5, ST7) et des dépressions dans les secondes pistes de la seconde couche d'enregistrement adjacentes à la périphérie interne des premières pistes de la seconde couche d'enregistrement (OUI en ST4, ST6, ST7) en se basant sur les informations de polarité indiquant que la polarité des dépressions dans la première couche d'enregistrement diffère de la polarité des dépressions dans la seconde couche d'enregistrement (NON en ST3).

12. Procédé de traitement de disque optique selon la revendication 9, **caractérisé en ce que**
les premières pistes sont des pistes d'espace vierge, et les secondes pistes sont des pistes de sillon.
